# EUROPÄISCHE PATENTSCHRIFT

(11) **EP 1 033 177 B1**
(45) Veröffentlichungstag und Bekanntmachung des Hinweises auf die Patenterteilung: **03.12.2003**
(21) Anmeldenummer: 99102637.8
(22) Anmeldetag: 12.02.1999
(51) Int. Cl.: B05B 13/02, B05B 15/04

(54) **Farbspritzanlage**
Paint spraying system
Installation de pulvérisation de peinture

(43) Veröffentlichungstag der Anmeldung: 06.09.2000
(73) Patentinhaber: VENJAKOB MASCHINENBAU GmbH & Co.KG, D-33378 Rheda-Wiedenbrück (DE)
(72) Erfinder: Potthoff, Bernhard, 33442 Herzebrock-Clarholz (DE)
(74) Vertreter: Schnekenbühl, Robert Matthias L.

(56) Entgegenhaltungen:
- EP-A- 0 571 697
- WO-A-94/02254
- GB-A- 2 100 211
- US-A- 4 076 231

## Beschreibung

Die Erfindung betrifft eine Farbspritzanlage mit einem umlaufend antreibbaren Bandförderer zum Transport der zu spritzenden Werkstücke, dessen endloses Förderband über mindestens zwei Umlenktrommeln geführt ist, und die mit wenigsten.s einer Reinigungseinrichtung für das Förderband ausgestattet ist.

Bei der in Frage kommenden Farbspritzanlage ist das Förderband des Bandförderers relativ breit und frei von Öffnungen oder Durchbrechungen. Das Aufbringen des Lackes oder der Farbe auf die Werkstücke erfolgt durch gesteuerte Spritzpistolen, die oberhalb des Bandförderers angeordnet sind. Es ist deshalb unvermeidbar, dass die zwischen den Werkstücken immer vorhandenen Lücken ebenfalls besprüht werden, sodass sich diese Farb- oder Lackschicht auf dem Förderband niederschlägt. Unmittelbar nach dem Abnehmen der Werkstücke vom Bandförderer ist es deshalb notwendig, daß die Außenseite des Förderbandes gründlich gereinigt wird.

In EP 0 571 697 A1 ist eine Fördereinrichtung für Farbspritzanlagen mit einer Reinigtingseinrichtung für eine Unterlage für das Spritzgut beschrieben.

In der GB 2 100 211 A ist eine Reinigungseinrichtung zur Säuberung von Förderbändern aus der Kohleförderung beschrieben.

Es ist deshalb schon eine Farbsprühanlage bekannt, die mit einer Vorrichtung zur Farbrückgewinnung ausgerüstet ist. Diese Vorrichtung besteht im wesentlichen aus einem zu den Walzen des Bandförderers achsparallelen Zylinder, der in der gleichen Drehrichtung wie die benachbarte Walze des Bandförderers angetrieben wird. Die sich berührenden Oberflächen der Walze und des Zylinders bewegen sich deshalb in entgegengesetzte Richtungen. Die von dem Zylinder von dem Förderband abgenommene Farbe wird dann durch Abstreifer vom Zylinder abgerakelt und in einer Auffangrinne gesammelt. Aus dieser Auffangrinne kann der Lack durch Schwerkraft über das Gefälle in den Sammelbehälter fließen, falls es sich um sehr dünnflüssigen Lack bzw. Farbe handelt, oder er wird durch einen mechanisch angetriebenen Schieber seitlich aus der Auffangrinne heraustransportiert. Zu diesem Zweck muß sich für jeden Austragungsvorgang zunächst eine gewisse Menge Lack in der Auffangrinne sammeln, während dessen das Lackmaterial bereits antrocknet. Diese Antrocknung des Lackes ist für die Wiederverwendbarkeit sehr schädlich.

Bei einer ebenfalls vorbekannten Farbsprüheinrichtung erfolgt der Transport der zu spritzenden Werkstücke durch einen Bandförderer, der mit mehreren äußerst schmalen Förderbändern ausgestattet ist. Im Bereich der Spritzpistolen wird die überschüssige Farbe bzw. Lack, das sogenannte Overspray durch ein quer zum Bandförderer laufendes Abnahmeband aufgenommen Die Reinigung dieses Abnahmebandes erfolgt ebenfalls durch eine Abstreifvorrichtung.

Die erstgenannte Sprüheinrichtung ist konstruktiv äußerst aufwendig und demzufolge kostenintensiv, da sich der Zylinder über die gesamte Breite des Förderbandes erstrecken muß. Außerdem ist es nicht möglich, das Förderband hinreichend zu reinigen, wenn Farben mit einer relativ hohen Viskosität verarbeitet werden. Derartige Farben bzw. Lacke sind als zähflüssig bzw. pastös anzusehen. Bei der letztgenannten Farbsprühanlage entfällt zwar der Zylinder, es kommt jedoch auch Farbe auf die schmalen Transportbänder, so daß auch diese gereinigt werden müssen.

Ausgehend von einem durch die erstgenannte Einrichtung geschaffenen Stand der Technik liegt der Erfindung die Aufgabe zugrunde, eine Farbspritzanlage gemäß dem Oberbegriff des Anspruches 1 so zu gestalten, daß sie konstruktiv einfacher und demzufolge kostengünstiger wird, und daß das Förderband auch dann noch hinreichend gereinigt wird, wenn hohe viskose bzw. zähflüssige oder pastöse sowie schnelltrocknende Farben verarbeitet werden.

Die gestellte Aufgabe wird gelöst, indem jede Reinigungseinrichtung ein umlaufend antreibbares und endloses Abstreifband aufweist, das einer Umlenktrommel für das Förderband zugeordnet ist und gegenüber den Drehachsen der Umlenktrommeln des Förderbandes schräg steht und bei flächigem Kontakt mit dem Förderband gegenüber diesem mit höherer Geschwindigkeit antreibbar ist.

Das Hauptfunktionsteil der Reinigungseinrichtung ist nunmehr das Abstreifband, dessen Breite wesentlich geringer ist als die Breite des Förderbandes. Um das Abstreifband zu führen, sind wenige und einfache Bauteile notwendig. Da es gegenüber den Drehachsen der Umlenktrommeln schräg steht und außerdem mit einer höheren Geschwindigkeit angetrieben wird als das Förderband, entsteht eine Geschwindigkeitkomponente, die auf den äußeren Rand des Abstreifbandes gerichtet ist, so daß die durch das kontinuierlich umlaufende Abstreifband mitgenommene Farbe vom Förderband wegtransportiert und auf schnellstem Wege ohne zusätzliche Auffangrinne oder mechanische Schieber seitlich ausgetragen wird. Da sich die Laufrichtungen des Förderbandes und des Abstreifbandes kreuzen, wird sinngemäß ein Schleifeffekt erzielt, so daß auch bei der Verarbeitung von hoch viskosen Farben oder Lacken eine äußerst gründliche und zufriedenstellende Reinigung des Förderbandes erfolgt. Der Schleifeffekt ist dabei nicht so groß, daß es zum Abrieb des Förderbandes und des Abstreifbandes kommt.

In weiterer Ausgestaltung ist vorgesehen, daß das Abstreifband jeder Reinigungseinrichtung einer Umlenktrommel für das Förderband und/oder einem das Förderband auslenkenden Gleitschuh zugeordnet ist. Dadurch wird sinngemäß ein festes Widerlager für das Abstreifband geschaffen, wodurch der Reinigungseffekt begünstigt wird, da ein Auslenken des Förderbandes verhindert wird. Der konstruktive Aufwand wird minimiert, wenn die Farbspritzanlage mit einem Abstreifband ausgerüstet ist und dieses der hinteren Umlenktrommel, in Laufrichtung des Obertrums des Bandförderers gesehen, zugeordnet ist. Dadurch kann die Reinigung des Förderbandes unmittelbar nach dem Abnehmen der gespritzten Werkstücke erfolgen, sodass die auf das Förderband gespritzte Farbe noch nicht allzu stark angetrocknet ist. Außerdem ist das Abstreifband für Wartungs- und Reinigungsarbeiten besonders gut zugänglich.

In vorteilhafter Weise schließt die Seitenkante des Abstreifbandes zu einer rechtwinklig zur Seitenkante des Förderbandes stehenden Achse einen spitzen Winkel ein, der im Bereich von 10° liegt, vorzugsweise jedoch 7° ist. Durch einen solchen Schrägungswinkel, in Verbindung mit einer angepassten relativ hohen Laufgeschwindigkeit wird hinreichend sichergestellt, dass die vom Förderband abgestreifte Farbe außer Kontakt mit dieser kommt, dass jedoch die Breite des Abstreifbandes noch verhältnismäßig klein ist. Damit jedoch die abgestreifte Farbe nicht vom Abstreifband seitlich herunterläuft ist vorgesehen, dass das Abstreifband gegenüber der horizontalen um einen kleinen Winkel derart geneigt ist, dass die äußere, dem Förderband abgewandte Seitenkante des Abstreifbandes höher steht als die innere Seitenkante. Dieser Winkel könnte beispielsweise 2-3° betragen. Damit das das Förderband kontaktierende Obertrum des Abstreifbandes nicht ausweichen kann ist vorgesehen, dass es sich auf einer ortsfesten Tragplatte abstützt, und dass diese Tragplatte an der dem Obertrum zugewandten Seite eine parallel und im Abstand zu den Randkanten des Obertrums des Abstreifbandes verlaufende Nut aufweist, deren Abstand zu den Seitenkanten der Tragplatte verändert werden kann, die sich beidseitig der vertikalen Projektionen der Drehachse der zugehörigen Umlenktrommel erstreckt. Dabei bietet die Nut den Vorteil, dass das Obertrum des Abstreifbandes das zu reinigende Förderband geringfügig umschlingt, sodass eine flächige Berührung zwischen dem Abstreifband und dem Förderband gegeben ist. Um die von dem Förderband abgestreifte Farbe von dem Abstreifband abzunehmen, ist vorgesehen, dass der hinteren, in Laufrichtung des Obertrums des Abstreifbandes gesehen, eine weitere Umlenkwalze zugeordnet ist, die gegenüber der hinteren Umlenkwalze nach unten versetzt ist, und dass zwischen der hinteren Umlenkwalze und der zusätzlichen Umlenkwalze eine Rakeleinrichtung vorgesehen ist. Der Versatz der zusätzlichen Umlenkwalze nach unten bietet den Vorteil, dass das Abstreifband nur unwesentlich über den zugehörigen Seitenrand des Förderbandes hinausgeführt werden muß. Da die Laufrichtung des Abstreifbandes zwischen der hinteren Umlenkwalze und der zusätzlichen Umlenkwalze abwärts gerichtet ist, wird durch die Schwerkraft das Abrakeln des Abstreifbandes begünstigt. Dieser Effekt wird noch verstärkt, wenn die zusätzliche Umlenkwalze gegenüber der hinteren Umlenkwalze in Richtung zur vorderen Umlenkwalze versetzt ist, und wenn die Rakeleinrichtung einstückig und v-förmig ausgebildet ist, wobei die Spitze der Rakeleinrichtung in Laufrichtung des Abstreifbandes vorn liegt. Die in der Mitte des Abstreifbandes zusammengeführte Farbe kann dann ohne zusätzliche Bauteile direkt in ein Auffanggefäß abgeleitet werden, bedingt durch die Wirkung der Schwerkraft.

In einer weiteren Ausführung verläuft das Förderband und das Abstreifband horizontal, d.h. die Umlenktrommeln und die Umlenkwalzen sind auf horizontalen Achsen gelagert. Bei dieser Ausführung liegt das Abstreifband dann zweckmäßigerweise unterhalb der hinteren Umlenktrommel. Es ist jedoch auch denkbar, dass das Förderband vertikal steht, wobei die Umlenktrommeln auf horizontalen Achsen gelagert sind. Das Abstreifband würde in diesem Falle jedoch in der gleichen Anordnung ausgebildet sein wie bei den zuvor beschriebenen Ausführungen. Bei beiden Ausführungen ist es jedoch vorteilhaft, wenn die dem Abstreifband zugeordnete Umlenktrommel innerhalb der entsprechenden Projektion der Außenkontur des Abstreifbandes liegt.

Anhand der beiliegenden Zeichnungen wird die Erfindung noch näher erläutert.

Es zeigen:
- Figur 1: die erfindungsgemäße Farbspritzanlage, rein schematisch das Förderband und das Abstreifband mit Blick auf die hintere Umlenkwalze für das Förderband zeigend,
- Figur 2: eine der Fig. 1 entsprechende Draufsicht,
- Figur 3: eine den Fig. 1 und 2 entsprechende Seitenansicht, mit Blick auf die Abstreifeinrichtung für das Abstreifband,
- Figur 4: eine der Fig. 1 entsprechende Darstellung in einer zweiten Ausführungsform,
- Figur 5: eine der Fig. 4 entsprechende Draufsicht,
- Figur 6: eine den Fig. 4 und 5 entsprechende Seitenansicht, mit Blick auf die Abstreifeinrichtung für das Abstreifband,
- Figur 7: eine Einzelheit, die Tragplatte für das Abstreifband zeigend,
- Figur 8: eine Ausführung, bei der das Förderband über horizontale Umlenkwalzen geführt wird, bei der jedoch die zu spritzenden Gegenstände während des Spritzvorganges an einer ortsfesten Aufhängung vor dem Förderband oder mittels eines separaten Hängeförderers vor dem Förderband entlanggefördert werden, mit Blick auf das Förderband und
- Figur 9: eine der Fig. 8 entsprechende Seitenansicht.

Aus Gründen der vereinfachten Darstellung sind in den Fig. im wesentlichen nur das Förderband 10, die in Laufrichtung des Obertrums 10a des Förderbandes 10 hintere Umlenktrommel 11 für das Förderband 10, das um drei Umlenkwalzen 12, 13, 14 geführte Abstreifband 15 sowie die Rakeleinrichtung 16 zum Abnehmen der Farbe vom Abstreifband 15 und die Tragplatte 17 der erfindungsgemäßen Farbspritzanlage dargestellt.

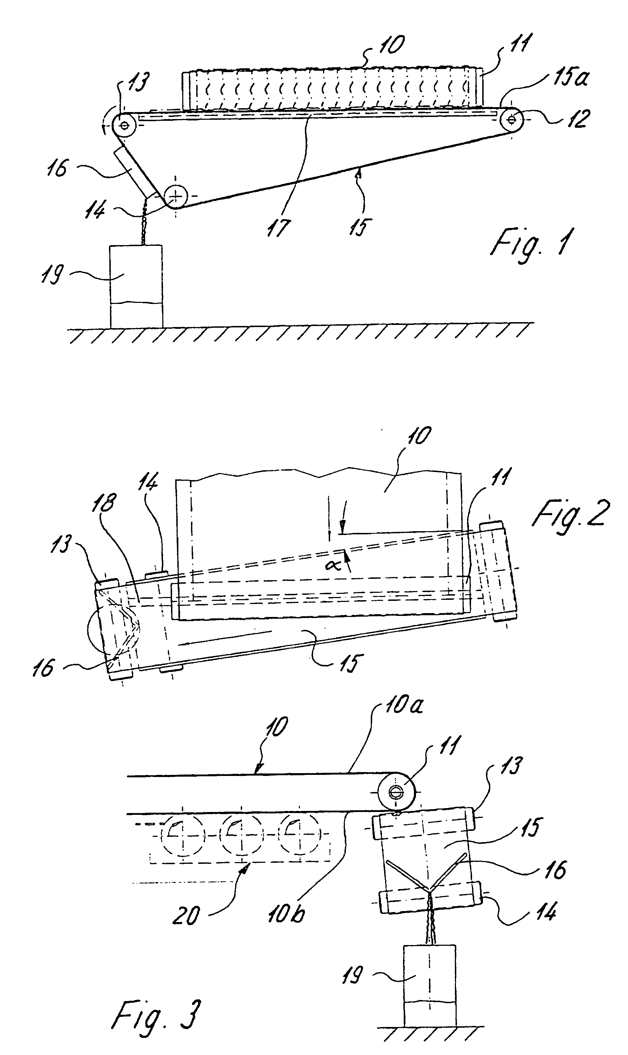

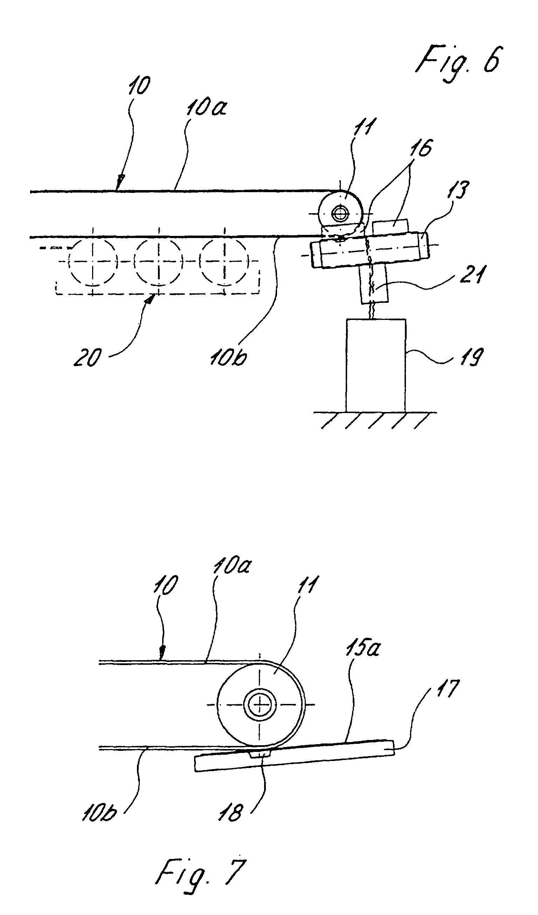

Wie insbesondere die Fig. 1 zeigt, ist das Förderband 10 während des Spritzvorganges teilweise mit Farbe oder Lack verschmutzt. Dieses sogenannte Overspray wird durch das Abstreifband 15 vom Förderband 10 abgezogen. Dazu steht das Abstreifband 15 schräg zum Förderband 10. Wie insbesondere die Fig. 2 und 5 zeigen, wird von der Seitenkante des Abstreifbandes 15 und einer gedachten vom Schnittpunkt der Seitenkanten des Förderbandes 10 ausgehenden Achse ein spitzer Winkel α (Fig. 2) eingeschlossen, der ca. 10 Grad beträgt. Die Fig. zeigen außerdem, daß in den dargestellten Ausführungsbeispielen die hintere Umlenktrommel 11 für das Förderband 10, entsprechend projiziert innerhalb der Außenkontur des Abstreifbandes 15 liegt. In den dargestellten Ausführungsbeispielen gemäß den Fig. 1 bis 7 liegt das Abstreifband 15 unter der hinteren Umlenktrommel 11 und berührt das Förderband 10. Damit das Abstreifband 15 nicht ausweicht, stützt sich das Obertrum 15a auf der Tragplatte 17 ab. Die Tragplatte 17 ist an der dem Obertrum 15a zugewandten Seite mit einer durchgehenden Nut 18 versehen, die senkrecht unter der Drehachse der Umlenktrommel 11 liegt. Dadurch besteht die Möglichkeit, daß das Abstreifband 15 bzw. das Obertrum 15a das Förderband 10 um einen kleinen Winkel umschlingt, wodurch die Reinigungswirkung wesentlich erhöht wird. Das Abstreifband 15 wird mit einer gegenüber dem Förderband 10 höheren Geschwindigkeit angetrieben, so daß die abgenommene Farbe vom Förderband 10 bzw. der Umlenktrommel 11 abgezogen und seitlich ausgetragen wird.

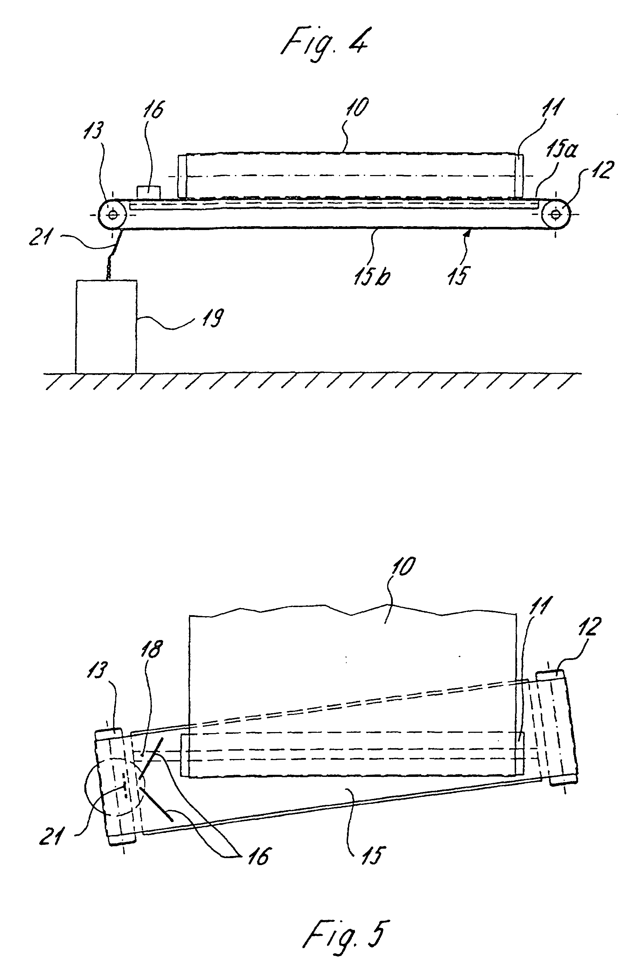

Bei der Ausführung nach den Fig. 1 bis 3 wird das Abstreifband 15 über die drei Umlenkwalzen 12, 13, 14 geführt, wobei die Umlenkwalze 14 gegenüber der hinteren Umlenkwalze 13 nach unten und in Richtung zur vorderen Umlenkwalze 12 versetzt ist, so daß in dem Bereich zwischen den Umlenkwalzen 13 und 14 das Abstreifband 15 entsprechend schräg verläuft. In diesem Bereich ist die Rakeleinrichtung 16 angeordnet, die im wesentlichen aus V-förmig gebogenen Profilen besteht, wie Fig. 3 zeigt. Durch die Wirkung der Schwerkraft fließt die abgerakelte Farbe ohne eine Ableit- oder Abnahmevorrichtung direkt in ein Gefäß 19, welches unterhalb der Rakeleinrichtung 16 steht.

Die Fig. 3 zeigt, daß das Untertrum 10b des Förderbandes noch durch eine Nachreinigungseinrichtung 20 gesäubert wird. Diese Nachreinigungseinrichtung 20 besteht im wesentlichen aus drei gegenläufig zum Untertrum 10b rotierenden Walzen. Außerdem wird das Untertrum 10b noch mit Reinigungsmitteln beaufschlagt.

Bei der Ausführung nach den Fig. 4 und 5 wird das Abstreifband 15 lediglich um zwei Umlenkwalzen 12 und 13 geführt. Wie die Fig. zeigt, ist die Rakeleinrichtung 16 in der Mitte geöffnet, so daß aus der abgenommenen Farbe eine Spur gebildet wird. Mittels eines dem Untertrum 15b zugeordneten Abstreifers 21 wird dann die Farbe vom Abstreifband 15 abgenommen und fließt in das Gefäß 19. Die Schrägstellung des Abstreifbandes 15 und die Geschwindigkeitsdifferenz zwischen dem Abstreifband 15 und dem Förderband entspricht der Ausführung nach den Fig. 1 bis 3.

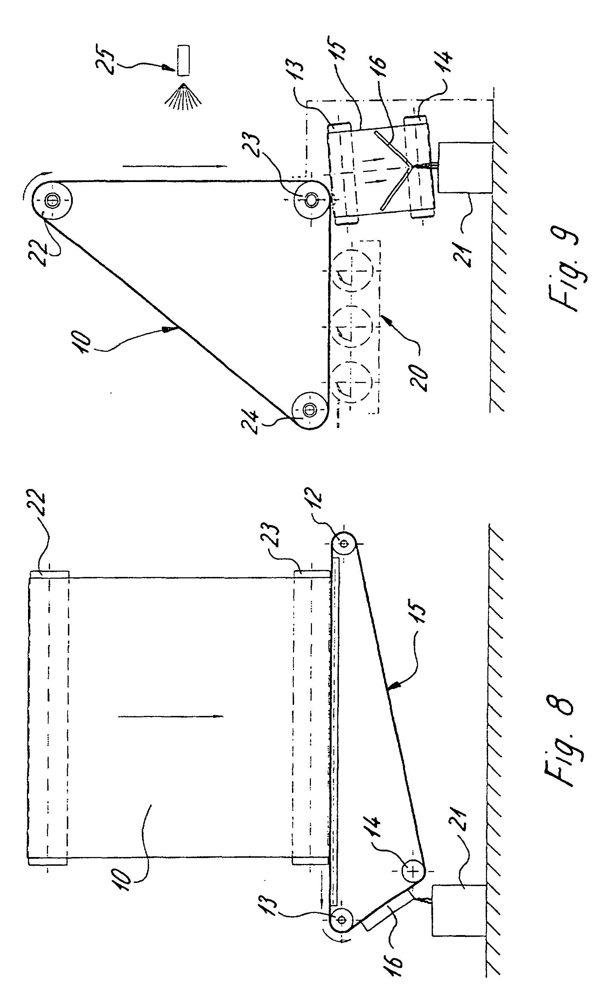

Die Fig. 6 zeigt, daß das Abstreifband 15 um einen relativ kleinen spitzen Winkel gegen die Horizontale geneigt ist. Die Neigung ist so gewählt, daß die äußere, der Umlenktrommel 11 abgewandte Randkante des Abstreifbandes 15 höher steht als die innere Randkante. Durch die Schrägstellung des Abstreifbandes 15 gegenüber der Umlenktrommel 11 und aufgrund der höheren Geschwindigkeit wird die vom Förderband 10 abgenommene Farbe in Richtung zum äußeren Rand des Abstreifbandes 15 gezogen. Die Schrägstellung gegenüber der Horizontalen verhindert, daß die Farbe seitlich abläuft und erzeugt gleichzeitig einen Freiwinkel zwischen dem Untertrum 10b des Förderbandes 10 und dem Obertrum 15a des Abstreifbandes 15 im Bereich der gegenseitigen Überlagerung.

Bei der Ausführung nach der Fig. 6 entspricht die Rakeleinrichtung 16 der Ausführung nach den Fig. 4 und 5.

Die Schrägstellung des Abstreifbandes 15 ist auch bei der Ausführung nach den Fig. 1 bis 3 und 8 und 9 gegeben.

Die Fig. 7 in Verbindung mit den Fig. 2 und 5 zeigt, daß die Tragplatte 17 mit einer durchgehenden Nut 18 versehen ist, deren Mittelachse senkrecht unter der Drehachse der Umlenktrommel 11 liegt.

Bei der Ausführung nach den Fig. 8 und 9 wird das Förderband 10 um Umlenktrommeln 22 bis 24 geführt, die ebenfalls um horizontale Achsen drehbar sind. Der Unterschied zu den Ausführungen nach den Fig. 1 bis 7 besteht jedoch darin, daß die nicht dargestellten Werkstücke an einer ortsfesten Aufhängung vor dem Förderband 10 plaziert oder mittels eines separaten Hängeförderers vor dem Förderband 10 entlang gefördert werden. Das Spritzaggregat ist durch das Bezugszeichen 25 angedeutet. Das Abstreifband 15 ist entsprechend den Ausführungen nach den Fig. 1 bis 3 gestaltet und der unteren Umlenkwalze 23 zugeordnet. Das Abstreifband 15 wird nicht näher beschrieben. Es sei noch erwähnt, daß auch bei der Ausführung nach den Fig. 8 und 9 das Abstreifband 15 entsprechend der Ausführung nach den Fig. 4 und 5 gestaltet sein kann.

In nicht dargestellter Weise könnte das Abstreifband 15 auch einem ortsfesten Gleitschuh zugeordnet werden, der so gestaltet ist, daß das Förderband 10 ausgelenkt wird.

Die Erfindung ist nicht auf die dargestellten Ausführungsbeispiele beschränkt. Wesentlich ist das einer Umlenktrommel 11 oder eine Umlenkwalze 23 zugeordnete Abstreifband 15, welches schräg zum Förderband bzw. zur Drehachse der zugeordneten Umlenktrommel 11 bzw. Umlenkwalze 23 verläuft und sich über die gesamte Breite erstreckt. Ferner ist wesentlich, daß das Abstreifband 15 mit einer gegenüber dem Förderband 10 höheren Geschwindigkeit angetrieben wird und die abgenommene Farbe ohne mechanische Zusatzeinrichtung und/oder einen mechanischen Schieber seitlich vom Förderband 10 ausgetragen wird.

## Patentansprüche

1. Farbspritzanlage mit einem umlaufend antreibbaren Bandförderer zum Transport der zu spritzenden Werkstücke, dessen endloses Förderband (10) über mindestens zwei Umlenktrommeln (11; 22, 23, 24) geführt ist und die mit wenigstens einer Reinigungseinrichtung für das Förderband (10) ausgestattet ist
**dadurch gekennzeichnet, dass**
die Reinigungseinrichtung ein umlaufend antreibbares und endloses Abstreifband (15) aufweist, wobei das Abstreifband (15)
einer Umlenktrommel (11; 23) für das Förderband (10) zugeordnet ist und
gegenüber den Drehachsen der Umlenktrommeln (11; 22, 23, 24) des Förderbandes (10) schräg steht und
bei flächigem Kontakt mit dem Förderband (10) gegenüber diesem mit einer höheren Geschwindigkeit antreibbar ist.

2. Farbspritzanlage nach Anspruch 1, **dadurch gekennzeichnet, daß** das Abstreifband (15) jeder Reinigungseinrichtung einem das untere Trum (10b) des Förderbandes (10) auslenkenden Gleitschuh zugeordnet ist.

3. Farbspritzanlage nach Anspruch 2, **dadurch gekennzeichnet, daß** das Abstreifband (15) der hinteren Umlenktrommel (11; 23) des Bandförderers zugeordnet ist, in Laufrichtung des Obertrums (10a) des Förderbandes (10) gesehen.

4. Farbspritzanlage nach Anspruch 1, **dadurch gekennzeichnet, daß** eine Seitenkante des Abstreifbandes (15) gegenüber einer im Schnittpunkt mit einer Seitenkante des Förderbandes (10) rechtwinklig zur Seitenkante des Förderbandes (10) stehenden Achse einen spitzen Winkel (α) einschließt, der im Bereich von 10 Grad liegt, vorzugsweise 7 Grad beträgt.

5. Farbspritzanlage nach einem oder mehreren der vorhergehenden Ansprüche 1 bis 4, **dadurch gekennzeichnet, daß** das Abstreifband (15) gegenüber der Horizontalen um einen relativ kleinen spitzen Winkel derart geneigt ist, daß die äußere, dem Förderband (10) abgewandte Kante des Abstreifbandes (15) höher steht als die innere Seitenkante.

6. Farbspritzanlage nach einem oder mehreren der vorhergehenden Ansprüche 1 bis 5, **dadurch gekennzeichnet, daß** das das Förderband (10) kontaktierende Obertrum (15a) des Abstreifbandes (15) sich auf einer ortsfesten Tragplatte (17) abstützt, und daß diese Tragplatte (17) an der dem Obertrum (15a) zugewandten Seite eine parallel und in einem vorzugsweise veränderbaren Abstand zu den Randkanten der Tragplatte (17) verlaufende Nut (18) aufweist, die sich beidseitig der vertikalen Projektion der Drehachse der zugehörigen Umlenktrommel (11; 23) erstreckt.

7. Farbspritzanlage nach einem oder mehreren der vorhergehenden Ansprüche 1 bis 6, **dadurch gekennzeichnet, daß** das Abstreifband, in Laufrichtung seines Obertrums (15a) gesehen, über eine hintere Umlenkwalze (13) geführt ist, der eine weitere, nach unten versetzte Umlenkwalze (14) zugeordnet ist; und daß zwischen der hinteren Umlenkwalze (13) und der weiteren Umlenkwalze (14) eine Rakeleinrichtung (16) zum Abnehmen der Farbe vom Abstreifband (15) angeordnet ist.

8. Farbspritzanlage nach Anspruch 7, **dadurch gekennzeichnet, daß** die zusätzliche Umlenkwalze (14) gegenüber der hinteren Umlenkwalze (13) in Richtung zur vorderen Umlenkwalze (12) versetzt ist, und daß die Rakeleinrichtung (16) einstöckig und V-förmig ausgebildet ist, und daß die Spitze der Rakeleinrichtung (16) in Laufrichtung des Abstreifbandes (15) gesehen, vorn liegt.

9. Farbspritzanlage nach einem oder mehreren der vorhergehenden Ansprüche 1 bis 8, **dadurch gekennzeichnet, daß** das Förderband (10) und das Abstreifband (15) im wesentlichen horizontal verlaufen, und daß das Abstreifband (15) unterhalb der hinteren Umlenktrommel (11), die innerhalb der Projektion der Außenkontur des Abstreifbandes (15) liegt, läuft.

10. Farbspritzanlage nach einem oder mehreren der vorhergehenden Ansprüche 1 bis 8, **dadurch gekennzeichnet, daß** das Förderband (10) um horizontale Umlenktrommeln (22, 23, 24) geführt ist, daß die zu spritzenden Werkstücke an einer ortsfesten Aufhängung vor dem Förderband (10) plaziert oder mittels eines separaten Hängeförderers vor dem Förderband (10) entlanggefördert werden, und daß der unteren und den Spritzaggregaten (25) zugewandten Umlenkwalze (23) das Abstreifband (15) zugeordnet ist.

11. Farbspritzanlage nach einem oder mehreren der vorhergehenden Ansprüche 1 bis 10, **dadurch gekennzeichnet, daß** der Rakeleinrichtung (16) eine Nachreinigungseinrichtung (20) nachgeschaltet ist.

## Claims

1. A paint spray system comprising a belt conveyor which is drivable in a rotating manner and used for transporting the workpieces to be sprayed, and whose endless conveyor belt (10) is guided over at least two deflection drums (11; 22,23,24), and which is equipped with at least one cleaning device for the conveyor belt (10),
wherein the cleaning device has an endless wiping belt (15) which is drivable in a rotating manner and associated with a deflection drum (11; 23) for the conveyor belt, and which is at an angle with respect to the axes of rotation of the deflection drums (11; 22,23,24) of the conveyor belt (10) and can be operated at a higher speed than the conveyor belt (10) while being in areal contact with the conveyor belt.

2. The paint spray system as recited in Claim 1,
**characterized in that** the wiping belt (15) of each cleaning device is associated with a sliding shoe deflecting the lower run (10b) of the conveyor belt (10).

3. The paint spray system as recited in Claim 2,
**characterized in that** the wiping belt (15) is associated with the rear deflection drum (11; 23) of the belt conveyor, as viewed in the direction of travel of the upper run (10a) of the conveyor belt (10).

4. The paint spray system as recited in Claim 1,
**characterized in that** a side edge of the wiping belt (15) forms an acute angle (_) with respect to an axis which, at the point of intersection with a side edge of the conveyor belt (10), is perpendicular to the side edge of the conveyor belt (10), the acute angle being in the range of 10 degrees, preferably being 7 degrees.

5. The paint spray system as recited in one or more of the preceding Claims 1 through 4,
**characterized in that** the wiping belt (15) is inclined with respect to the horizontal by a relatively small angle such that the outer edge of the wiping belt (15) facing away from the conveyor belt (10) is higher than the inner side edge.

6. The paint spray system as recited in one or more of the preceding Claims 1 through 5,
**characterized in that** the upper run (15a) of the wiping belt (15) contacting the conveyor belt (10) is supported on a stationary supporting plate (17); and
**in that** this supporting plate (17) has a groove (18) on the side facing the upper run (15a), the groove extending parallel to and at a preferably variable distance from the side edges of the supporting plate (17) and extending on both sides of the vertical projection of the axis of rotation of the associated deflection drum (11; 23).

7. The paint spray system as recited in one or more of the preceding Claims 1 through 6,
**characterized in that** the wiping belt, when viewed in the direction of travel of its upper run (15a), is guided over a rear deflector roll (13) with which is associated a further, downwardly offset deflector roll (14); and
**in that** a doctor device (16) for removing the paint from the wiping belt (15) is arranged between the rear deflector roll (13) and the additional deflector roll (14).

8. The paint spray system as recited in Claim 7,
**characterized in that** the additional deflector roll (14) is offset with respect to the rear deflector roll (13) in a direction toward the front deflector roll (12); and
**in that** the doctor device (16) is formed in one piece in the shape of a V, and
**in that** the apex of the doctor device (16) being located in front as viewed in the direction of travel of the wiping belt (15).

9. The paint spray system as recited in one or more of the preceding Claims 1 through 8,
**characterized in that**
the conveyor belt (10) and the wiping belt (15) run substantially horizontally; and
**in that** the wiping belt (15) runs below the rear deflection drum (11) that lies within the projection of the outer contour of the wiping belt (15).

10. The paint spray system as recited in one or more of the preceding Claims 1 through 8,
**characterized in that**
the conveyor belt (10) is guided around horizontal deflection drums (22, 23, 24);
**in that** the workpieces to be sprayed are placed on a stationary suspension mount in front of the conveyor belt (10) or transported in front of and along the conveyor belt (10) by a separate suspended conveyor; and
**in that** the wiping belt (15) is associated with the lower deflector roll (23) facing the spray units (25).

11. The paint spray system as recited in one or more of the preceding Claims 1 through 10,
**characterized in that** a secondary cleaning device (20) is arranged downstream of the doctor device (16).

## Revendications

1. Installation de projection de peinture avec un convoyeur à bandes susceptible d'être entraîné de façon circonférentielle pour le transport de pièces à peindre dont la bande de transport sans fin (10) est conduite sur au moins deux tambours de déviation (11, 22, 23, 24) et laquelle installation est équipée d'au moins un dispositif de nettoyage pour la courroie de transport.
**caractérisée en ce que**,
le dispositif de nettoyage comporte une bande de raclage (15) susceptible d'être entraîné de façon circonférentielle et sans fin ; la bande de raclage (15)
étant associée à un tambour de déviation (11, 23) pour la bande de transport (10) et se situe en biais par rapport aux axes de rotation des tambours de déviation (11, 22, 23, 24) de la bande de transport (10) et
est susceptible d'être entraîné à une vitesse plus élevée par rapport à la bande de transport grâce à un contact de surface avec la bande de transport (10).

2. Installation de projection de peinture selon la revendication 1, **caractérisée en ce que** la bande de raclage (15) de chaque dispositif de nettoyage est associé à un patin déviant la branche (10b) inférieur de la bande de transport (10).

3. Installation de projection de peinture selon la revendication 2, **caractérisée en ce que** la bande de raclage (15) est associée au tambour de déviation arrière (11, 23) du convoyeur de bande, vu en direction de circulation de la branche supérieure (10a) de la bande de transport.

4. Installation de projection de peinture selon la revendication 1, **caractérisée en ce qu'**un bord latéral de la bande de transport (15) forme un angle aigu (_ ) qui se trouve dans la zone de 10 degrés, de préférence, et s'élève à 7 degrés de préférence , par rapport à un axe positionné de façon perpendiculaire par rapport à la bande de transport (10) dans le point d'intersection avec un bord latéral des la bande de transport (10).

5. Installation de projection de peinture selon un ou plusieurs des revendications précédentes 1 à 4, **caractérisée en ce que** la bande de raclage (15) est inclinée par rapport à l'horizontale selon un angle aigu relativement faible de façon à ce que le bord extérieur de la bande de raclage (15) orienté vers la bande de transport (10) soit plus haut que le bord latéral intérieur.

6. Installation de projection de peinture selon une ou plusieurs des revendications précédentes 1 à 5, **caractérisée en ce que** la branche supérieure (15a) de la bande de raclage (15) qui contacte la bande de transport (10) s'appuie sur une plaque de support (17) fixée à un endroit et **en ce que** cette plaque de support (17) présente sur le côté orienté vers la branche supérieure (15a) une rainure (18) parallèle et qui s'étend vers les bords de la plaque de support (17), de préférence, selon une distance susceptible d'être modifiée, laquelle rainure s'étend des deux côtés de la projection verticale de l'axe de rotation du tambour de déviation (11, 23) associé.

7. Installation de projection de peinture selon une ou plusieurs des revendications précédentes 1 à 6, **caractérisée en ce que** la bande de raclage est conduite en direction de circulation de sa branche supérieure (15 a), sur un rouleau de déviation (13) arrière qui est associé à un rouleau de déviation (14) déplacé vers le bas, et **en ce qu'**entre le rouleau de déviation arrière (13) et l'autre rouleau de déviation (14), on a disposé un disposition de raclage (16) pour retirer la peinture de la bande de raclage (15).

8. Installation de projection de peinture selon la revendication 7, **caractérisée en ce que** les rouleaux de déviation (14) sont déplacés en face du rouleau de déviation (13) arrière en direction du rouleau de déviation (12) avant et **en ce que** le disposition de raclage (16) est formé d'une pièce et sous la forme d'un V, et **en ce que** la pointe du dispositif de raclage (16) se situe à l'avant, vu en direction de circulation de la bande de raclage (15).

9. Installation de projection de peinture selon une ou plusieurs des revendications précédentes 1 à 8, **caractérisée en ce que** la bande de transport (10) et la bande de raclage (15) s'étendent essentiellement de façon horizontale et **en ce que** la bande de raclage (15) se trouve sous le tambour de déviation (11) arrière situé à l'intérieur de la projection du contour extérieur de la bande de raclage (15).

10. Installation de projection de peinture selon une ou plusieurs des revendications précédentes 1 à 8, **caractérisée en ce que** la bande de transport (10) est conduite autour de tambours de déviation (22, 23, 24) horizontaux, **en ce que** les pièces à peindre sont situés sur une suspension fixe devant la bande de transport (10) ou seront conduites au moyen d'un convoyeur à suspension séparé devant la bande de transport (10), et **en ce que** le rouleau de déviation (23) inférieur orienté vers les groupes de projection (25) est associé à la bande de raclage (15).

11. Installation de projection de peinture selon une ou plusieurs des revendications précédentes 1 à 10, **caractérisée en ce que** le dispositif de raclage (16) est raccordé à un dispositif de post-nettoyage (20).
